# EUROPEAN PATENT SPECIFICATION

(11) **EP 3 158 424 B1**
(45) Date of publication and mention of the grant of the patent: **13.03.2024**
(21) Application number: 15822666.2
(22) Date of filing: 25.06.2015
(51) Int. Cl.: G06V 40/18, G06F 3/01, G06V 40/16, G06V 40/19

(54) **SYSTEM AND METHOD FOR DISPLAY ENHANCEMENT**
SYSTEM UND VERFAHREN ZUR ANZEIGEVERBESSERUNG
SYSTÈME ET PROCÉDÉ D'AMÉLIORATION DE DISPOSITIF D'AFFICHAGE

(30) Priority: 14.07.2014 US 201414330648
(43) Date of publication of application: 26.04.2017
(73) Proprietor: Huawei Technologies Co., Ltd., Shenzhen, Guangdong 518129 (CN)
(72) Inventor: ESTACIO, Jeffrey James, San Diego, California 92129 (US)
(74) Representative: Pfenning, Meinig & Partner mbB
(86) International application number: PCT/CN2015/082368
(87) International publication number: WO 2016/008354

(56) References cited:
- EP-A1- 2 579 127
- EP-A1- 2 922 049
- EP-A2- 2 515 526
- CN-A- 101 943 982
- CN-A- 103 500 061
- CN-A- 103 765 374
- CN-A- 103 902 157
- CN-A- 103 902 179
- CN-A- 103 914 130
- US-A- 5 839 000
- US-A1- 2008 062 383
- US-A1- 2014 247 210
- US-B1- 7 401 920
- RICARDO JOTA ET AL: "Palpebrae superioris", GRAPHICS INTERFACE 2005 : PROCEEDINGS ; VICTORIA, BRITISH COLUMBIA, 9 - 11 MAY 2005, CANADIAN INFORMATION PROCESSING SOCIETY, 403 KING STREET WEST, SUITE 205 TORONTO, ONT. M5U 1LS CANADA, 3 June 2015 (2015-06-03), pages 273-280, XP058069814, ISSN: 0713-5424 ISBN: 978-1-56881-308-0
- Takashi Nagamatsu ET AL: "MobiGaze: Development of a Gaze Interface for Handheld Mobile Devices CHI 2010: Work-in-Progress (Spotlight on Posters Days 1 & 2)", CHI 2010, 13 April 2010 (2010-04-13), XP055405636, Retrieved from the Internet: URL:http://dl.acm.org/ft_gateway.cfm?id=17 53983&ftid=775528&dwn=1&CFID=808221914&CFT OKEN=52459075 [retrieved on 2017-09-12]
- Manu Kumar: "Gaze-enhanced user interface design", , 1 January 2007 (2007-01-01), XP055194333, ISBN: 978-0-54-906189-2 Retrieved from the Internet: URL:http://ddod.riss.kr/ddodservice/search /viewDetailThesisInfoForm.jsp?p_no=1142045 6&p_abstract_yn=Y&p_toc_yn=N&p_fulltext_ki nd=002&p_search=&p_k2dockey
- COSTIN CURATU; HONG HUA; JANNICK ROLLAND: "Projection-based head-mounted display with eye tracking capabilities", SPIE, PO BOX 10 BELLINGHAM WA 98227-0010 USA, 1 September 2005 (2005-09-01), XP040207785,
- MORIMOTO C H ET AL: "Detecting eye position and gaze from a single camera and 2 light sources", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 4, 11 August 2002 (2002-08-11), pages 314-317, XP010613530, DOI: 10.1109/ICPR.2002.1047459 ISBN: 978-0-7695-1695-0
- DONGHENG LI ET AL: "Starburst: A hybrid algorithm for video-based eye tracking combining feature-based and model-based approaches", IEEE COMPUTER SOCIETY CONFERENCE ON COMPUTER VISION AND PATTERN RECOGNITION. PROCEEDINGS, 21 September 2005 (2005-09-21), pages 79-79, XP055340851, US ISSN: 1063-6919, DOI: 10.1109/CVPR.2005.531
- EBISAWA Y: "Realtime 3D position detection of human pupil", VIRTUAL ENVIRONMENTS, HUMAN-COMPUTER INTERFACES AND MEASUREMENT SYSTEM S, 2004. (VCIMS). 2004 IEEE SYMPOSIUM ON BOSTON, MA, USA JULY 12-14, 2004, PISCATAWAY, NJ, USA,IEEE, 12 July 2004 (2004-07-12), pages 8-12, XP010773354, DOI: 10.1109/VECIMS.2004.1397176 ISBN: 978-0-7803-8339-5

## Description

### TECHNICAL FIELD

This application claims priority to U.S. non-provisional patent application Serial No. 14/330,648, filed on July 14, 2014 and entitled " System and Method for Display Enhancement".

The present invention relates to a system and method for displays, and, in particular, to a system and method for display enhancement.

### BACKGROUND

It is desirable to bring increased visibility and visual clarity to areas of a display that a user is interested in when the user is having trouble seeing the region of interest. For example, small text or low contrast images may be hard to see. When the display is, for example, on a mobile device, it is desirable for the display to be enhanced automatically without a user specifically requesting the enhancement.

EP 2 515 526 A2 discloses an electronic display device with image capture and analysis module in order to detect the face of the user, including face detection under low-light conditions using an infrared light source.

US patent number 5,839,000 discloses an apparatus to adjust the zoom magnification control of a camera having a variable-magnification device based on a zoom condition of the user's face.

### SUMMARY

The invention is set out in the appended set of claims. The further examples called embodiments in the description are illustrative examples and not embodiments claimed in the present application.

An embodiment method for enhancing a display includes receiving an optical image of a face of a user and detecting whether the user is squinting in accordance with the optical image. The method also includes detecting a region on the display where the user is looking. Additionally, the method includes enhancing the region on the display where the user is looking when the user is squinting.

An exemplary mobile device includes a display and a processor. The mobile device also includes a non-transitory computer readable storage medium storing programming for execution by the processor. The programming includes instructions to receive an optical image of a face of a user and detect whether the user is squinting in accordance with the optical image. The programming also includes instructions to receive an infrared image of the face of the user and detect a region on the display where the user is looking in accordance with the infrared image. Additionally, the programming includes instructions to enhance the region on the display where the user is looking when the user is squinting.

An exemplary wearable device includes an infrared camera and a first infrared light source within 2 cm of the infrared camera. The wearable device also includes a second infrared light source at least 5 cm from the infrared camera, where the wearable device is configured to activate the first infrared light source when the wearable device receives a bright pupil detection signal, and to activate the second infrared light source when the wearable device receives a dark pupil detection signal, and where the wearable device is configured to wirelessly transmit an image from the infrared camera to a mobile device.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates a flowchart for an embodiment method of display enhancement;
Figure 2 illustrates the bright pupil effect in an eye;
Figure 3 illustrates the dark pupil effect in an eye;
Figures 4A-B illustrate the adjustment of a contrast level of an image in a display;
Figures 5A-B illustrate the enhancement of an area containing small text by zooming in on the text;
Figures 6A-B illustrate the modification of graphical user interface (UI) elements containing small text;
Figures 7A-B illustrate the rearrangement of a layout of GUI elements;
Figure 8 illustrates a flowchart for an embodiment method of squint detection;
Figure 9 illustrates a flowchart for an embodiment method of eye tracking;
Figure 10 illustrates a system for squint detection;
Figure 11 illustrates a system for eye tracking;
Figure 12 illustrates another system for eye tracking;
Figure 13 illustrates a system for display enhancement;
Figure 14 illustrates another system for display enhancement; and
Figure 15 illustrates a block diagram of a general-purpose computer system.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

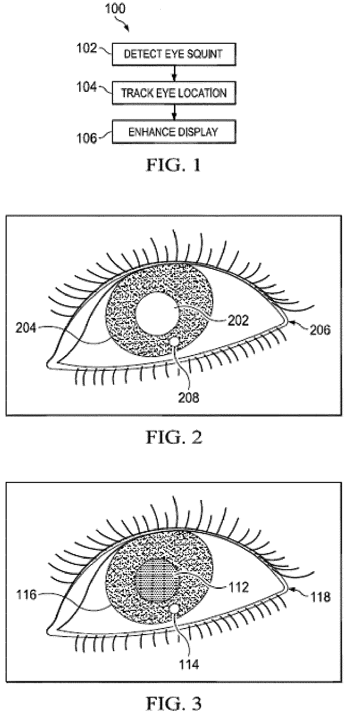

An embodiment enhances a display, for example in a mobile device, by detecting whether the user is squinting and where on the display the user is looking. When the user is squinting, the region where the user is looking at is enhanced. Thus, the display may be enhanced without the user doing anything with the user's hands or having another type of active physical interaction. Figure 1 illustrates flowchart 100 for a method of enhancing a display. The display displays visual output to the user, such as text, graphics, video, or a combination thereof. The display may be a liquid crystal display (LCD). This method may be used, for example, by a mobile device, such as a smartphone, a tablet, a handheld computer, a media player, or a personal digital assistant (PDA). Initially, in step 102, the system detects an eye squint in a user. Squinting is a good indicator that the squinter is experiencing poor visibility. This is because squinting improves the visual acuity for subjects with refractive error (near sightedness, far sightedness, astigmatism, or presbyopia) and reduces error. Squinting changes the shape of the eye and reduces the amount of light that enters the eye. Because squinting is a natural mechanism for assisting poor vision, it is a good indicator that the squinter is experiencing has poor visibility. Because squinting is a facial expression, squinting may be detected using facial recognition techniques. A standard for facial expression metrics is facial action coding system (FACS). Facial expressions may be determined from action units (AUs) representing the muscular activity that produces momentary changes in facial appearance. There is a standard measure of features of facial expressions, such as lowered eyebrows, nose wrinkling, and jaw dropping. In FACS there is a squint action unit, AU 44. A squint may also be detected by a combination of lowered brows (AU 4), raised cheeks (AU 6), and tightened eyelids (AU 7). Action units may be recognized using a camera and facial recognition software.

Next, in step 104, eye tracking of the user's gaze is performed. Pupils may be tracked with infrared light using the bright pupil effect or the dark pupil effect. In the bright pupil effect, when infrared light rays are aligned with an infrared (IR) camera, they reflect off of the retina into the IR camera to make the pupil appear bright in a recorded image. Figure 2 illustrates the bright pupil effect. Eye 206 contains pupil 202, iris 204, and first Purkinje image 208. The first Purkinje image is the reflection from the outer surface of the cornea. In the dark pupil effect, when infrared light rays are offset from the IR camera's optical axis, the reflection is projected away from the IR camera to make the pupil appear dark in the recorded image. Figure 3 illustrates the dark pupil effect, where eye 118 contains pupil 112, iris 116, and first Purkinje image 114. In both methods of pupil tracking, the first Purkinje image, which is the reflection from the outer surface of the cornea, is in the same location. Bright pupil detection works best with blue or light colored eyes, while the dark pupil effect works best with dark colored eyes. The dark pupil effect works better in well-fit and natural light conditions, while the bright pupil method works better with less light. Additionally, bright pupil detection has fewer false positives.

An embodiment is equipped to perform both dark pupil detection and bright pupil detection. One infrared camera and two infrared light sources, one aligned with the IR camera and the other offset from the IR camera axis, are used. The aligned camera is used for bright pupil detection, while the off-axis camera may be used for dark pupil detection. In one example, the eye tracking hardware is embedded in a mobile device, such as a smartphone, tablet, handheld computer, media player, or PDA. In another example, the eye tracking hardware is mounted to the user's head as a wearable device or embedded in a wearable device, such as Google Glass^{™}.

In another example, visible spectrum light is used to perform dark pupil detection and/or bright pupil detection.

Alternatively, electrodes are used to track the user's gaze. The electrical potential of the eye is measured using electrodes placed around the eye. In an additional example, the eyes are tracked using an object, for example a specialized contact lens with an embedded mirror and/or magnetic field sensor, attached to the user's eye.

Finally, in step 106, the display is enhanced in the region where the user is looking. The region may be enhanced, for example, by adjusting the contrast of an image, reducing noise, sharpening, color balance adjustment, increasing the size of a text box or image, adjusting graphical user interface (GUI) elements to increase the size of some GUI elements, or other techniques to improve the image quality.

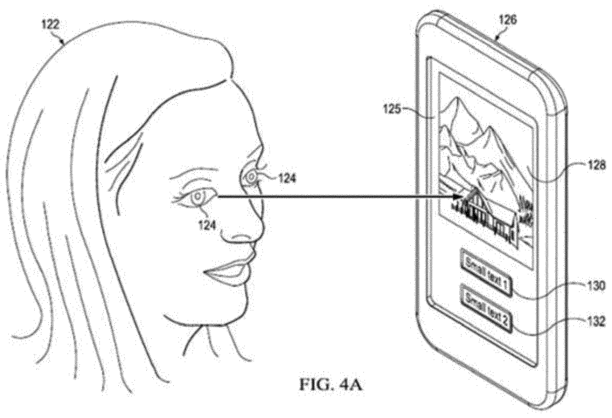

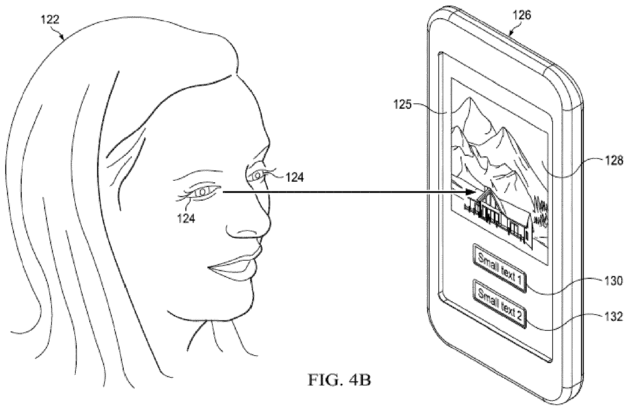

Contrast levels may be adjusted to improve visibility. Figures 4A-B illustrate the improved visibility and visual clarity by contrast level adjustment. In Figure 4A, the eyes 124 of user 122 are looking at picture 128 in display 125 on device 126. Display 125 also contains text 130 and text 132 as small text boxes. When eyes 124 of user 122 squint while looking at picture 128, picture 128 is enhanced by adjusting the contrast level. In one example, the contrast level of the whole display is adjusted. Alternatively, only the contrast level of the image is adjusted. In one example, luminance contrast, which is the ratio of the luminance difference, and the average luminance are adjusted. The contrast method used may be Weber contrast, Michelson contrast, root-mean-square (RMS) contrast, or another technique.

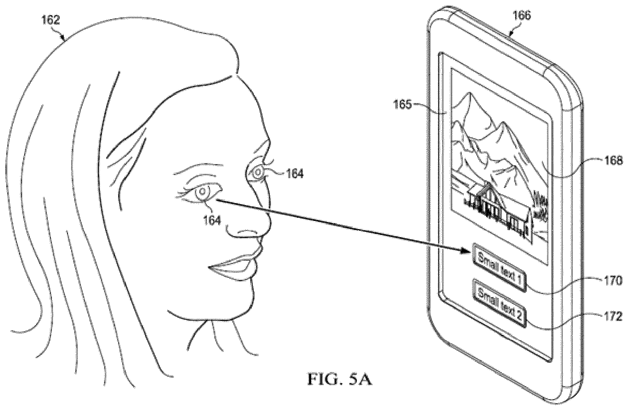

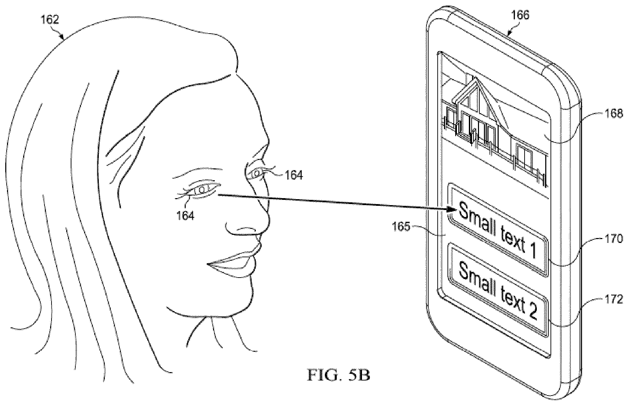

Visual elements may be zoomed in on. In Figures 5A-B, the clarity of small text that a user is looking at while squinting is enhanced by zooming in on the area of the text. The eyes 164 of user 162 are looking at text box 170 in display 165 on device 166, which also contains image 168 and text 172. When the eyes 164 of user 162 squint, the small text in text box 170 is enlarged to become clearer. Image 168 is partially covered. In other examples, a region where the user is looking at is zoomed in on.

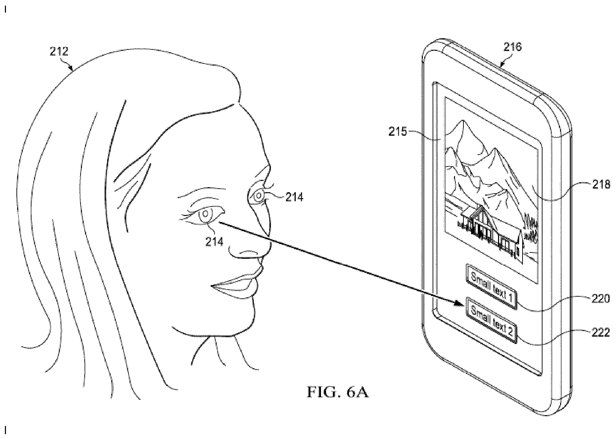

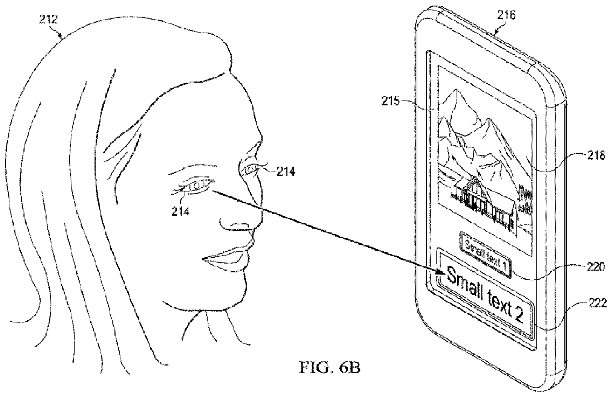

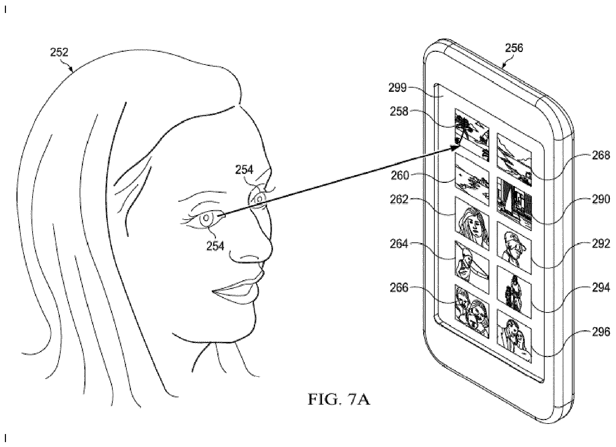

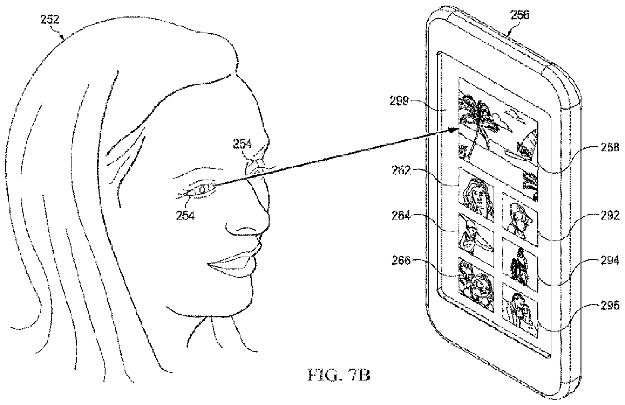

GUI elements may be modified to improve their visibility, while other GUI elements may be reduced or removed. GUI elements may include windows, text boxes, buttons, hyperlinks, drop-down lists, list boxes, combo boxes, check boxes, radio buttons, cycle buttons, data grids, sliders, tags, images, and videos. Figures 6A-B illustrate improving the visibility of small text by modifying the GUI element containing small unreadable text. The eyes 214 of user 212 are looking at text 222 in display 215 of device 216. Display 215 also contains picture 218 and text 220. When the user squints, the GUI containing text 222 is increased in size so the text is larger and more easily readable. In other examples, other GUI elements are removed or reduced in size. As illustrated in Figures 7A-B, the visibility of a picture is improved by rearranging the layout of GUI elements. The eyes 254 of user 252 are looking at picture 258 in display 299 on device 256. Also, display 299 contains pictures 260, 262, 264, 266, 268, 290, 292, 294, and 296. When the user squints while looking at picture 258, the resolution or size of picture 258 is increased. Pictures 268, 260, and 290 are removed to provide sufficient room for picture 258.

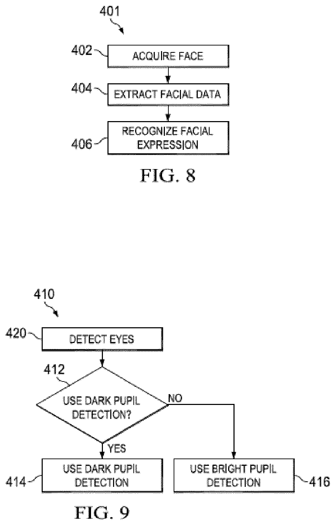

Figure 8 illustrates flowchart 401 for a method of detecting eye squinting. Initially, in step 402, a face is acquired. This may be done using face detection and/or head pose estimation. The face region is automatically found in the image. In one example, the face is detected for each frame. In another example, the face is detected in the first frame and tracked in the subsequent frames. Next, in step 404, the facial data is extracted from the face acquired in step 402, and facial changes based on facial expressions are represented. The facial features may be extracted using geometric feature-based methods and/or appearance-based methods. The geometric facial features include the shape and location of facial components, such as the mouth, eyes, eyebrows, and nose. The facial components or facial feature points may be extracted to form a feature vector representing the face geometry. In appearance-based methods, image filters, such as Gabor wavelets, are applied to the whole face or to specific regions of the face to extract a feature vector. The effects of in-plane head rotation and different scales of the faces may be reduced by face normalization before the feature extraction or by feature representation.

Finally, in step 406, the facial expression is recognized based on the facial features. The facial changes may be identified as facial action units, prototypical emotional expressions. AUs may be manually coded by experts. An intensity scale for the degree of muscle contraction may be used to determine the degree of facial expression. Classifiers such as neural network (NN), support vector machines (SVM), linear discriminant analysis (LDA), K-nearest neighbor, multinomial logistic ridge regression (MLR), hidden Markov models (HMM), tree augmented naive Bayes, and others may be used. Some systems use a rule-based classification based on the definition of the facial actions. Frame-based and sequence based expression recognition methods may be used. The frame-based recognition methods use the current frame with or without a reference image to recognize the facial expression in the frame. In sequence-based recognition methods, the temporal information of the sequences is used to recognize the expression for one or more frames.

Figure 9 illustrates flowchart 410 for a method of eye tracking. Initially, in step 420, the eye is detected. The eye may be detected when the eyes are extracted in squint detection. In another example, the eye position is detected using bright pupil detection and/or dark pupil detection. In bright pupil detection, an IR light source is aligned with an IR camera. The IR light source is reflected directly back to the IR camera, causing the pupil to appear bright. On the other hand, in dark pupil detection, an IR light source is offset from an IR camera. Because the IR light is reflected back at the IR light source, the pupil appears dark in the offset IR camera view.

In step 412, the system decides whether to use dark pupil detection and/or bright pupil detection to detect the pupil. The system detects the ambient lighting conditions and the color of the user's eye. Light colored eyes and bright lighting conditions point towards using the bright pupil method, while dark colored eyes and low lighting conditions point towards using the dark pupil method. The interference may also be determined. When there is too much interference, the system may switch from the bright pupil method to the dark pupil method. When there are shadows, for example of the eyelashes or face, the system may switch from the dark pupil method to the bright pupil method. In one example, the system alternates between bright pupil detection and the dark pupil detection. Alternatively, both methods are performed. When the dark pupil method is selected, dark pupil detection is performed in step 414. When bright pupil detection is selected, bright pupil detection is performed in step 416.

In step 416, bright pupil detection is performed. In both dark pupil detection and bright pupil detection, the user's face is illuminated using an infrared illuminator. The infrared illuminator may be a light emitting diode (LED). Using an infrared illuminator reduces the impact of ambient light conditions, produces the bright or dark pupil effect, and minimizes interference with the user, compared to using visible light. A bright pupil may be detected when the eyes are illuminated with a near infrared illuminator beaming light along the camera's optical axis. At the near infrared wavelength, pupils reflect most of the infrared light back to the camera, producing the bright pupil effect. This is similar to the red eye effect when flash is used in photography. The first-surface specular reflection of the illumination source off of the cornea is visible in both dark pupil detection and bright pupil detection. The vector between the pupil center and corneal reflection may be used as the dependent measure. The vector difference insensitive to movement in the camera and infrared source. Pupil detection is based on the intensity of the pupils and may also be based on the appearance of the eyes, for example using a support vector machine.

In step 414, dark pupil detection is performed. An infrared illuminator is used with an off-axis infrared camera. The pupils appear dark, because the reflected light is reflected on-axis back towards the IR light source, not into the off-axis camera. As in bright pupil detection, the first-surface specular reflection of the illumination source off of the cornea is also visible, and the vector between the pupil center and corneal reflection may be used as the dependent measure.

A feature based or a model-based approach may be used. In one example, a starburst algorithm is used, which combines feature-based and model-based approaches. In another example, a combination of bright pupil tracking and dark pupil tracking is used. For example, Kalman filtering tracking based on the bright pupil effect is augmented with a support vector machine classifier to perform verification of the detected eyes. When the Kalman eye tracker fails due to either weak pupil intensity or the absence of the bright pupils, eye tracking based on a mean shift is activated to continue tracking the eyes. The eye tracker returns to the Kalman filtering tracker when the bright pupils reappear.

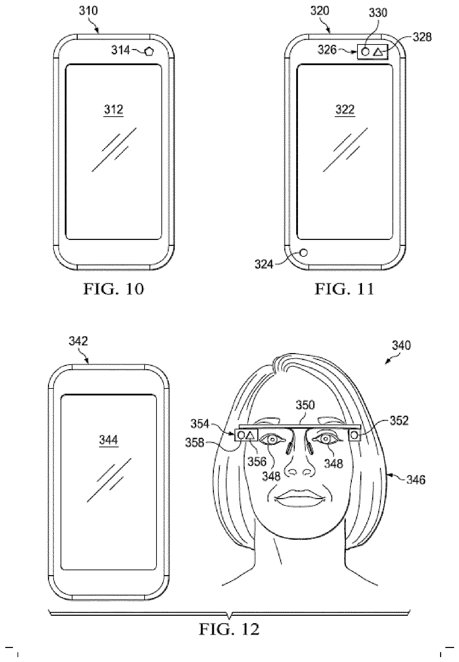

Figure 10 illustrates an example of hardware which may be used for squint detection. For example, mobile device 310 is a smartphone, a tablet, a handheld computer, a media player, or a personal digital assistant (PDA). Mobile device 310 contains camera 314 and display 312. Display 312, for example an LCD, shows visual output to the user, such as text, graphics, video, or a combination thereof. Display 312 may also be a touch screen. Camera 314 is a visible spectrum camera. Camera 314 has an optical system, for example a lens with a variable diaphragm to focus light onto an electronic sensor which detects light. Camera 314 may have a fixed focus lens and an optical sensor, such as a complementary metal oxide semiconductor (CMOS) image sensor or a charge-coupled device (CCD) image sensor behind the lens. Mobile device 310 contains an application processor, a baseband processor, persistent storage, a memory controller, a graphics processing unit (GPU) a peripheral interface, a radio frequency (RF) circuitry, audio circuitry, a global positioning system module (GPS), a power system, and an operating system (OS). The OS executes squint detection software stored in the persistent storage. When a user is in the field of view of camera 314, the software detects the user's face. Features are extracted from the image of the user's face. The software then detects whether the user is squinting. The facial expression of squinting may be detected using facial recognition techniques. Facial expressions are determined from AUs represent the muscular activity that produces momentary changes in facial appearance. In FACS there is a squint action unit, AU 44, which may be used to detect a squint. A squint may also be detected by a combination of lowered brows (AU 4), raised cheeks (AU 6), and tightened eyelids (AU 7).

Figure 11 illustrates an example of hardware for use in eye tracking. Mobile device 320, for example a smartphone, a tablet, a handheld computer, a media player, or a PDA, contains infrared unit 326 containing IR camera 328 and IR light source 330, display 322, which may be a touchscreen display, and IR light source 324. IR camera 328 contains a lens and a sensor array, for example a pyroelectric material, a ferroelectric detector, or microbolometer structure, and IR light sources 324 and 330 may be LEDs. Display 322, for example an LCD, shows visual output to the user, such as text, graphics, video, or a combination thereof. Display 322 may also be a touch screen input as well as an output. Also, mobile device 320 contains an application processor, a baseband processor, persistent storage, a memory controller, a GPU a peripheral interface, RF circuitry, audio circuitry, a GPS, a power system, and an OS, which executes an eye tracking software stored in the persistent storage. IR light source 330 is close to IR camera 328 to receive on-axis reflection for bright pupil detection, while IR light source 324 is relatively far from IR camera 328 for off-axis detection for dark pupil detection. To perform bright pupil detection, the eye tracking algorithm illuminates IR light source 330 and detects the pupil using bright pupil detection from an image from IR camera 328. Also, to perform dark pupil detection, the eye tracking software illuminates IR light source 324 and detects the pupil from the reflection in IR camera 328, which is off axis.

Figure 12 illustrates hardware 340 for eye tracking. User 346 wears wearable device 350 near eyes 348. In one example, wearable device 350 is Google Glass^{™}. Alternative, wearable device 350 is a separate device worn near the eyes. Wearable device 350 contains IR light source 352 and IR module 354. IR module 354 contains IR light source 358 and IR camera 356. IR camera 356 contains a lens and a sensor array, for example a pyroelectric material, a ferroelectric detector, or microbolometer structure. IR light sources 352 and 358 may be LEDs. IR camera 356 is close to IR light source 358, for example within 2 cm, for bright pupil detection, while IR light source 352 is relatively far from IR camera 356, for example at least 5 cm, for dark pupil detection. Wearable device 350 contains devices to determine its orientation and position relative to the face. This may be done using sensors, such as gyroscopes, accelerometers, and digital compasses.

Wearable device 350 communicates with mobile device 342, for example using Bluetooth or a proprietary frequency for communications. In some examples, mobile device 342 is a smartphone, a tablet, a handheld computer, a media player, or a PDA. Mobile devices 342 contains display 344, which may be an LCD which shows visual output to the user, such as text, graphics, video, or a combination thereof. Display 344 may also be a touch screen input as well as an output. Display 344 has a user interface for the OS which covers the user's gaze area.

Mobile device 342 also contains application processor, a baseband processor, persistent storage, a memory controller, a GPU a peripheral interface, RF circuitry, audio circuitry, a GPS, a power system, an OS, position sensors, and orientation sensors (not pictured). The position sensors and orientation sensors are used to determine the position and orientation of wearable device 350 relative to mobile device 342. Position and orientation data for wearable device 35 and mobile device 342 are compared by mobile device 342 to determine their relative positions and orientations. This is used to determine where in display 344 the user is gazing. The OS contains a user interface and executes eye tracking software stored in the persistent memory. The software detects the gaze using bright pupil detection when light source 358 is illuminated and using dark pupil detection when IR light source 352 is illuminated. The software transmits signals to activate and deactivate the appropriate IR light source.

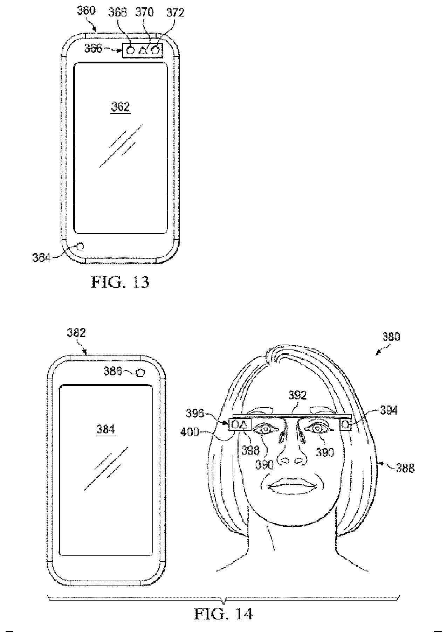

Figure 13 illustrates mobile device 360 for performing display enhancement. Mobile device 360 may be a smartphone, a tablet, a handheld computer, a media player, or a PDA. Mobile device 360 contains IR light source 364 for bright pupil detection, display 362, and optical assembly 366. Display 362, for example an LCD, displays visual output to the user, such as text, graphics, video, or a combination thereof. Display 362 may also be a touch screen input as well as an output. Camera 314 is a visible spectrum camera. Optical assembly 366 contains camera 372, IR camera 370, and IR light source 368. IR camera 370 contains a lens and a sensor array, for example a pyroelectric material, a ferroelectric detector, or microbolometer structure, and camera 372 has a lens, such as a fixed focus lens and an optical sensor, such as a CMOS image sensor or a CCD image sensor behind the lens. Also, mobile device 360 contains application processor, a baseband processor, persistent storage, a memory controller, a GPU a peripheral interface, RF circuitry, audio circuitry, a GPS, a power system, and an OS, where the OS has a user interface and executes eye tracking and facial recognition software. The software is stored in the persistent storage.

The software detects a user squinting using camera 372. Camera 372 takes an image of a user's face. The software detects the user's face, extracts facial features from the detected face, and determines the user's facial expression, for example using AUs. The software also detects the user's gaze using IR camera 370, IR light source 368, and IR light source 364. IR light sources 368 and 364 may be LEDs. When IR light source 368, and IR camera 370 receives the reflection from the user's eyes, the user's pupils are detected using bright pupil detection, because the IR light is reflected back towards the camera. When IR light source 364 is used, the user's pupils are detected using dark pupil detection, because the IR light is reflected back towards IR light source 364, not towards IR camera 370. The software may activate and deactivate the appropriate IR light source for bright pupil detection and dark pupil detection. For example, IR light source 368 may be activated during low light conditions or when the user has light colored eyes, while IR light source 364 is activated during bright lighting conditions or when the user has dark colored eyes. In another example, IR light sources 368 and 364 are alternated. Using bright pupil detection and/or dark pupil detection, the user's gaze is detected. When the user is squinting, the display in the area of the display where the user is looking is enhanced. Contrast in an image may be adjusted for increased clarity. In one example, small text or a small image is zoomed in on to increase the clarity. In another example, the layout of GUI elements may be changed to increase the size of the GUI element the user is looking at and removing or reducing the size of other GUI elements. The GUI element in question may be image or text elements. Figure 14 illustrates system 380 for detecting a squint in a face of a user, determining where on a display of a mobile device the user is looking, and enhancing that area of the display. User 388 is wearing wearable device 392 near the user's eyes, eyes 390. Wearable device 392 may have additional functionality, for example wearable device 392 is Google Glass^{™}. Alternatively, wearable device 392 is a standalone device. Wearable device 392 contains IR light source 394 and IR module 396, which contains IR light source 400 and IR camera 398. IR camera 398 contains a lens and a sensor array, for example a pyroelectric material, a ferroelectric detector, or microbolometer structure. IR light sources 394 and 400 may be LEDs. When IR light source 400 or IR light source 394 is illuminated, IR camera 398 receives an IR reflection off eyes 390. When IR light source 400 is illuminated, the light is reflected back towards IR camera 398, and bright pupil detection is performed. On the other hand, when IR light source 394 is used, dark pupil detection is used. Wearable device 392 may also contain position sensors, orientation sensors, or a digital compass which may be used to determine the orientation of wearable device 392 relative to mobile device 382.

Wearable device 392 communicates with mobile device 382, for example using Bluetooth or a proprietary communications band. Mobile device 382 may be a smartphone, a tablet, a handheld computer, a media player, or a PDA. Mobile device 382 transmits a message to wearable device 392 informing it to illuminate the appropriate one of IR light source 400 and IR light source 394.

Also, mobile device 382 receives images from IR camera 398 with IR light reflected off of a user's pupils. Mobile device 382 contains camera 386, display 384, application processor, a baseband processor, persistent storage, a memory controller, a GPU a peripheral interface, RF circuitry, audio circuitry, a GPS, a power system, and an OS. Display 384 may be an LCD which shows visual output to the user, such as text, graphics, video, or a combination thereof. Display 384 may also be a touch screen input as well as an output. Camera 386 may have a fixed focus lens and an optical sensor, such as a CMOS image sensor or a CCD image sensor behind the lens. When performing pupil detection, the orientation of wearable device 392 and mobile device 382 are determined, so it may be ascertained where on display 384 the user is looking. Position and orientation sensors on mobile device 382 and wearable device 392 may be used to determine the position and orientation of the two devices. Wearable device 392 transmits its position and orientation to mobile device 382. Then, their relative positions and orientations may be determined by mobile device 382 from the difference between their positions and orientations. From the relative orientations and the user's gaze, the location on display 384 where the user is looking may be determined using, for example, dark pupil detection or bright pupil detection. Whether the user is squinting is determined from images from camera 386. The face is detected in an image, and facial features are extracted from the detected face. Then, facial expressions are determined. When a squint is detected, the location where the user is looking is determined, and that location in the display is enhanced. The enhancement may increase the contrast in an image. Alternatively, the size of a text box or image is increased. In another example, the UI is rearranged so that the GUI element that a user is looking at is increased in size, possibly at the expense of other GUI elements.

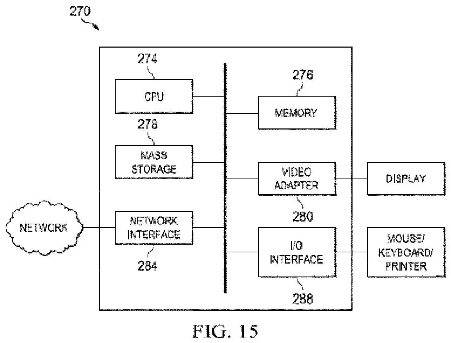

Figure 15 illustrates a block diagram of processing system 270 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input devices, such as a microphone, mouse, touchscreen, keypad, keyboard, and the like. Also, processing system 270 may be equipped with one or more output devices, such as a speaker, a printer, a display, and the like. The processing unit may include central processing unit (CPU) 274, memory 276, mass storage device 278, video adapter 280, and I/O interface 288 connected to a bus.

The bus may be one or more of any type of several bus architectures including a memory bus or memory controller, a peripheral bus, video bus, or the like. CPU 274 may comprise any type of electronic data processor. Memory 276 may comprise any type of system memory such as static random access memory (SRAM), dynamic random access memory (DRAM), synchronous DRAM (SDRAM), read-only memory (ROM), a combination thereof, or the like. The memory may include ROM for use at boot-up, and DRAM for program and data storage for use while executing programs.

Mass storage device 278 may comprise any type of storage device configured to store data, programs, and other information and to make the data, programs, and other information accessible via the bus. Mass storage device 278 may comprise, for example, one or more of a solid state drive, hard disk drive, a magnetic disk drive, an optical disk drive, or the like.

Video adaptor 280 and I/O interface 288 provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not pictured) may be used to provide a serial interface for a printer.

The processing unit also includes one or more network interface 284, which may comprise wired links, such as an Ethernet cable or the like, and/or wireless links to access nodes or different networks. Network interface 284 allows the processing unit to communicate with remote units via the networks. For example, the network interface may provide wireless communication via one or more transmitters/transmit antennas and one or more receivers/receive antennas. The processing unit is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method (100) for enhancing a display (125; 166; 216; 256), the method comprising:
receiving an optical image of a face of a user;
detecting whether the user is squinting (Step 102) in accordance with the optical image;
detecting a region on the display (125; 166; 216; 256) where the user is looking (Step 104) by
determining whether to perform dark pupil detection or bright pupil detection based on detecting an ambient lighting condition and/or a color of the user's eye(Step 412);
detecting the region on the display where the user is looking by performing dark pupil detection using a first infrared image of the face of the user, wherein the first infrared image is obtained by using an infrared camera and a first infrared light source offset from the infrared camera, when it is determined to perform dark pupil detection (Step 414); and
detecting the region on the display where the user is looking by performing bright pupil detection using a second infrared image of the face of the user, wherein the second infrared image is obtained by using the infrared camera and a second infrared light source aligned with the infrared camera, when it is determined to perform bright pupil detection (Step 416); and
enhancing the region on the display (125; 166; 216; 256) where the user is looking (Step 106) when the user is squinting.

2. The method of claim 1, wherein detecting whether the user is squinting comprises:
detecting the face of the user from the optical image;
extracting facial data from the face of the user to produce extracted facial data; and
recognizing a facial expression of the face of the user in accordance with the extracted facial data.

3. The method of claim 1, wherein enhancing the region on the display (125; 166; 216; 256) comprises adjusting a contrast level of the region on the display (125; 166; 216; 256).

4. The method of claim 1, wherein enhancing the region on the display (125; 166; 216; 256) comprises zooming in on the region on the display (125; 166; 216; 256).

5. The method of claim 1, wherein enhancing the region on the display (125; 166; 216; 256) comprises modifying a user interface, UI, element in the region on the display (125; 166; 216; 256).

6. The method of claim 5, wherein modifying the UI element comprises rearranging a plurality of UI elements comprising the UI element

## Patentansprüche

1. Verfahren (100) zum Verbessern einer Anzeige (125; 166; 216; 256), wobei das Verfahren umfasst:
Empfangen eines optischen Bilds eines Gesichts eines Benutzers; Erkennen, gemäß dem optischen Bild, ob der Benutzer schielt (Schritt 102);
Erkennen eines Bereichs auf der Anzeige (125; 166; 216; 256), wohin der Benutzer blickt (Schritt 104), durch
Bestimmen, basierend auf dem Erkennen eines Umgebungslichtzustands und/oder einer Farbe des Auges des Benutzers (Schritt 412), ob eine Erkennung einer dunklen Pupille oder eine Erkennung einer hellen Pupille durchgeführt werden soll;
Erkennen des Bereichs auf der Anzeige, wohin der Benutzer blickt, durch Durchführen der Erkennung einer dunklen Pupille unter Verwendung eines ersten Infrarotbilds des Gesichts des Benutzers, wobei das erste Infrarotbild durch Verwenden einer Infrarotkamera und einer ersten Infrarotlichtquelle, die von der Infrarotkamera versetzt ist, erlangt wird, wenn bestimmt wird, dass eine Erkennung einer dunklen Pupille durchgeführt werden soll (Schritt 414); und
Erkennen des Bereichs auf der Anzeige, wohin der Benutzer blickt, durch Durchführen einer Erkennung einer hellen Pupille unter Verwendung eines zweiten Infrarotbilds des Gesichts des Benutzers, wobei das zweite Infrarotbild durch Verwenden der Infrarotkamera und einer zweiten Infrarotlichtquelle, die mit der Infrarotkamera ausgerichtet ist, erlangt wird, wenn bestimmt wird, dass eine Erkennung einer hellen Pupille durchgeführt werden soll (Schritt 416); und
Verbessern des Bereichs auf der Anzeige (125; 166; 216; 256), wohin der Benutzer blickt (Schritt 106), wenn der Benutzer schielt.

2. Verfahren nach Anspruch 1, wobei Erkennen, ob der Benutzer schielt, Folgendes umfasst:
Erkennen des Gesichts des Benutzers aus dem optischen Bild;
Extrahieren von Gesichtsdaten aus dem Gesicht des Benutzers, um extrahierte Gesichtsdaten zu erzeugen; und
Erkennen eines Gesichtsausdrucks des Gesichts des Benutzers gemäß den extrahierten Gesichtsdaten.

3. Verfahren nach Anspruch 1, wobei Verbessern des Bereichs auf der Anzeige (125; 166; 216; 256) Anpassen eines Kontrastniveaus des Bereichs auf der Anzeige (125; 166; 216; 256) umfasst.

4. Verfahren nach Anspruch 1, wobei Verbessern des Bereichs auf der Anzeige (125; 166; 216; 256) Vergrößern des Bereichs auf der Anzeige (125; 166; 216; 256) umfasst.

5. Verfahren nach Anspruch 1, wobei Verbessern des Bereichs auf der Anzeige (125; 166; 216; 256) Modifizieren eines Benutzerschnittstellenelements (user interface element, UI-Elements) in dem Bereich auf der Anzeige (125; 166; 216; 256) umfasst.

6. Verfahren nach Anspruch 5, wobei Modifizieren des UI-Elements Neuanordnen einer Vielzahl von UI-Elementen umfasst, die das UI-Element umfasst.

## Revendications

1. Procédé (100) d'amélioration d'un dispositif d'affichage (125 ; 166 ; 216 ; 256), le procédé comprenant :
la réception d'une image optique d'un visage d'un utilisateur ; la détection du fait que l'utilisateur plisse les yeux (étape 102) conformément à l'image optique ;
la détection d'une région sur le dispositif d'affichage (125 ; 166 ; 216 ; 256) où l'utilisateur regarde (étape 104)
en déterminant s'il faut effectuer une détection de pupille sombre ou une détection de pupille claire sur la base de la détection d'une condition d'éclairage ambiant et/ou d'une couleur de l'œil de l'utilisateur (étape 412) ;
en détectant la région sur le dispositif d'affichage où l'utilisateur regarde en effectuant une détection de pupille sombre à l'aide d'une première image infrarouge du visage de l'utilisateur, dans lequel la première image infrarouge est obtenue à l'aide d'une caméra infrarouge et d'une première source de lumière infrarouge décalée par rapport à la caméra infrarouge, lorsqu'il est déterminé d'effectuer une détection de pupille sombre (étape 414) ; et
en détectant la région sur le dispositif d'affichage où l'utilisateur regarde en effectuant une détection de pupille claire à l'aide d'une seconde image infrarouge du visage de l'utilisateur, dans lequel la seconde image infrarouge est obtenue à l'aide de la caméra infrarouge et d'une seconde source de lumière infrarouge alignée avec la caméra infrarouge, lorsqu'il est déterminé d'effectuer une détection de pupille claire (étape 416) ; et
en améliorant la région sur le dispositif d'affichage (125 ; 166 ; 216 ; 256) où l'utilisateur regarde (étape 106) lorsqu'il plisse les yeux.

2. Procédé selon la revendication 1, dans lequel la détection du fait que l'utilisateur plisse les yeux comprend :
la détection du visage de l'utilisateur à partir de l'image optique ;
l'extraction des données faciales à partir du visage de l'utilisateur pour obtenir des données faciales extraites ; et
la reconnaissance d'une expression faciale du visage de l'utilisateur conformément aux données faciales extraites.

3. Procédé selon la revendication 1, dans lequel l'amélioration de la région sur le dispositif d'affichage (125 ; 166 ; 216 ; 256) comprend l'ajustement d'un niveau de contraste de la région sur le dispositif d'affichage (125 ; 166 ; 216 ; 256).

4. Procédé selon la revendication 1, dans lequel l'amélioration de la région sur le dispositif d'affichage (125 ; 166 ; 216 ; 256) comprend l'agrandissement sur la région sur le dispositif d'affichage (125 ; 166 ; 216 ; 256).

5. Procédé selon la revendication 1, dans lequel l'amélioration de la région sur le dispositif d'affichage (125 ; 166 ; 216 ; 256) comprend la modification d'un élément d'interface utilisateur, UI, dans la région sur le dispositif d'affichage (125 ; 166 ; 216 ; 256).

6. Procédé selon la revendication 5, dans lequel la modification de l'élément UI comprend la réorganisation d'une pluralité d'éléments UI comprenant l'élément UI.
